# FASCICULE DE BREVET EUROPEEN

(11) **EP 1 434 967 B1**
(45) Date de publication et mention de la délivrance du brevet: **12.12.2007**
(21) Numéro de dépôt: 02790509.0
(22) Date de dépôt: 11.10.2002
(51) Int. Cl.: F25B 25/00, F25B 5/04, B60H 1/32, F01P 9/06, F25B 5/02, B60H 1/00

(54) **DISPOSITIF DE REGULATION THERMIQUE POUR VEHICULE AUTOMOBILE**
VORRICHTUNG ZUR THERMISCHEN REGELUNG VON KRAFTFAHRZEUGEN
TEMPERATURE CONTROL DEVICE FOR MOTOR VEHICLE, FOR EXAMPLE ELECTRICAL OR HYBRID

(30) Priorité: 12.10.2001 FR 0113154
(43) Date de publication de la demande: 07.07.2004
(73) Titulaire: Peugeot Citroen Automobiles SA, 92200 Neuilly sur Seine (FR)
(72) Inventeur: AMARAL, Manuel, F-75015 Paris (FR); DUMOULIN, Pierre, F-92250 La Garenne Colombes (FR)
(74) Mandataire: Berger, Helmut
(86) Numéro de dépôt international: PCT/FR2002/003491
(87) Numéro de publication internationale: WO 2003/031884

(56) Documents cités:
- EP-A- 0 488 553
- EP-A- 0 710 807
- DE-A- 19 609 048
- DE-A- 19 904 617
- FR-A- 2 686 655
- FR-A- 2 693 685
- FR-A- 2 779 215
- US-A- 3 070 975
- US-A- 3 830 077
- US-A- 5 497 941
- US-A- 6 016 662
- US-A- 6 092 379

## Description

La présente invention concerne un véhicule avec un dispositif de régulation thermique, par exemple de type électrique ou hybride.

Un véhicule de type hybride combine deux sources d'énergie pour assurer sa propulsion : un moteur électrique et un moteur thermique. Dans un véhicule de type électrique ou hybride, le moteur électrique est alimenté par une batterie et commandé par un dispositif d'électronique de puissance.

Le bon fonctionnement de la batterie dépend de la température de l'air environnant cette batterie, notamment de la température ambiante à l'extérieur du véhicule. Généralement la batterie est désactivée lorsque sa température dépasse une valeur maximale d'environ 55 °C. Toutefois, la durée de vie de la batterie pourrait être augmentée en limitant davantage sa température maximale, de manière par exemple à éviter autant que possible que cette température maximale dépasse 35°C.

Il est connu de refroidir la batterie à l'aide de moyens de mise en circulation d'un flux d'air au contact de cette batterie. Habituellement, l'air de refroidissement de la batterie provient de l'habitacle du véhicule. Les moyens de climatisation de l'habitacle participent donc au refroidissement de la batterie. En variante, l'air de refroidissement de la batterie peut provenir de l'extérieur du véhicule.

Ainsi, on connaît déjà dans l'état de la technique un dispositif de régulation thermique pour véhicule automobile, du type comprenant une pompe à chaleur comportant un circuit principal de fluide frigorigène prélevant des calories d'une source froide pour les transférer vers une source chaude, la source froide comportant un échangeur thermique fluide frigorigène/air, dit premier évaporateur.

L'évaporateur, constitué habituellement par un échangeur thermique fluide frigorigène/air agencé dans l'habitacle, permet de refroidir l'air de cet habitacle. L'air prélevé dans l'habitacle permet de refroidir la batterie.

Comme pour la batterie, il convient de limiter la température du dispositif d'électronique de puissance.

Il est connu de refroidir le dispositif d'électronique de puissance à l'aide d'un circuit de liquide caloporteur (généralement un mélange d'eau et d'antigel) raccordé à un échangeur thermique liquide caloporteur/air, agencé dans la face avant du véhicule. À la sortie de l'échangeur thermique, la température du liquide caloporteur est abaissée généralement jusqu'à environ 60°C. Toutefois, le volume et le coût du dispositif d'électronique de puissance pourraient être réduits en abaissant davantage la température du liquide caloporteur destiné à refroidir ce dispositif, par exemple jusqu'à 20°C.

L'invention a notamment pour but d'optimiser, d'une part, le fonctionnement et la durée de vie de la batterie et, d'autre part, l'encombrement et la coût du dispositif d'électronique de puissance, ceci en modifiant le moins possible la configuration du compartiment moteur et des moyens de climatisation de l'habitacle du véhicule.

A cet effet, l'invention a pour objets un dispositif de régulation thermique de véhicule automobile, du type décrit dans US-A-5 497 941, comprenant une pompe à chaleur comportant un circuit principal de fluide frigorigène prélevant des calories d'une source froide pour les transférer vers une source chaude, la source froide comportant un échangeur thermique fluide frigorigene/air, dit premier évaporateur, et un échangeur thermique fluide frigorigène/liquide caloporteur, dit second évaporateur, couplant thermiquement le circuit principal de fluide frigorigène à un circuit secondaire de liquide caloporteur raccordé à au moins un premier échangeur thermique secondaire en échange thermique avec au moins une première source de calories du véhicule **caractérisé** par les caractéristiques de la revendication 1.

Suivant des caractéristiques de différents modes de réalisation de ce dispositif :
- le circuit secondaire de liquide caloporteur est raccordé à un second échangeur thermique secondaire en échange thermique avec une seconde source de calories du véhicule ;
- les premier et second échangeurs secondaires sont raccordés en parallèle dans le circuit secondaire de liquide caloporteur ;
- les premier et second évaporateurs sont raccordés en parallèle ;
- le circuit principal de fluide frigorigène comprend des première et seconde branches parallèles d'évaporateur auxquelles sont raccordées respectivement les premier et second évaporateurs, chaque branche d'évaporateur comportant une vanne de détente agencée en aval ou en amont de l'évaporateur ;
- la première branche d'évaporateur comporte une vanne de régulation de débit de fluide agencée de préférence en aval du premier évaporateur ;
- dans la première franche d'évaporateur, la vanne de détente et la vanne de régulation forment un seul et même organe ;
- les premier et second, évaporateurs sont raccordés en série, le second évaporateur étant agencé en amont ou en aval du premier évaporateur en considérant le sens de circulation du fluide frigorigène dans le circuit principal ;
- le circuit secondaire de liquide caloporteur est muni d'une pompe d'entraînement de ce liquide caloporteur ;
- le fluide frigorigène du circuit principal est du type R134a ;
- le fluide frigorigène du circuit principal comprend du dioxyde de carbone ;
- le circuit principal comprend un échangeur thermique intermédiaire traversé par une branche du circuit principal en amont du compresseur et une branche du circuit principal en aval du condenseur ;
- le liquide caloporteur du circuit secondaire de liquide caloporteur est un mélange d'eau et d'antigel.

L'invention sera mieux comprise à la lecture de la description qui va suivre, donnée uniquement à titre d'exemple et faite en se référant aux dessins dans lesquels
- les figures 1 et 2 sont des vues schématiques d'un dispositif de régulation thermique selon deux modes de réalisation de l'invention, respectivement ;
- les figures 3 à 5 sont des vues schématiques d'un dispositif de régulation thermique selon trois autres modes de réalisation, respectivement

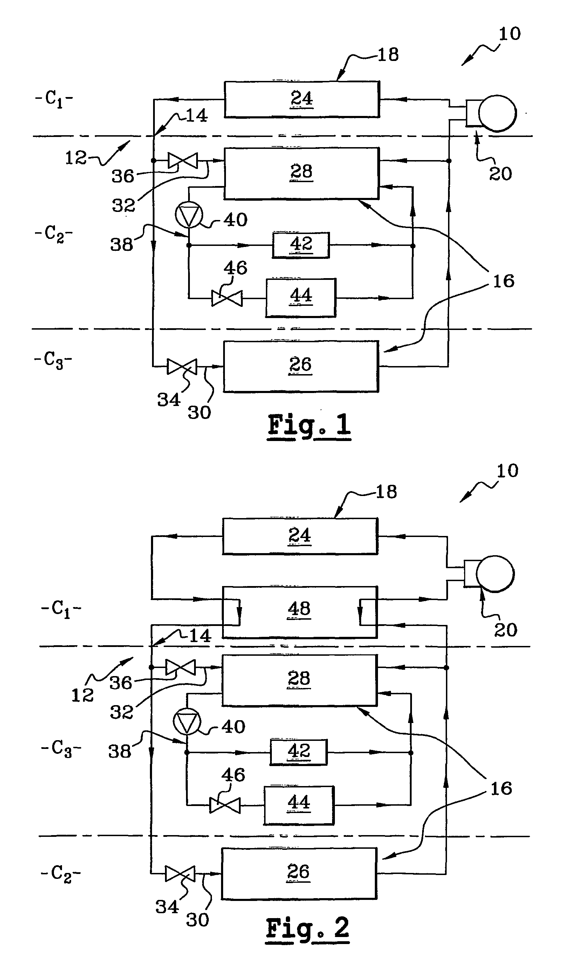

On a représenté sur la figure 1 un dispositif de régulation thermique pour véhicule automobile, notamment de type électrique ou hybride, selon un premier mode de réalisation de l'invention. Ce dispositif de régulation thermique est désigné par la référence générale 10.

Dans ce qui suit, deux organes sont dits couplés thermiquement entre eux lorsqu'ils échangent de la chaleur entre eux au moyen d'un échangeur thermique approprié.

Le dispositif de régulation thermique 10 comprend une pompe à chaleur 12 comportant un circuit principal 14 de fluide frigorigène, de type à compression, prélevant des calories d'une source froide 16 pour les transférer au moins partiellement vers une source chaude 18.

Les sources froide 16 et chaude 18 sont raccordées entre elles par un compresseur 20 (electrique ou mecanique). Le fluide frigorigène se vaporise en enlevant de la chaleur à la source froide 16. Le compresseur 20 aspire le fluide vaporisé et le refoule vers la source chaude 18 où il se condense en refroidissant. Le sens de circulation du fluide frigorigène dans le circuit principal 14 est indiqué par des flèches sur la figure 1. Le fluide frigorigène circulant dans le circuit principal 14 est d'un type classique. Ce fluide frigorigène est choisi par exemple parmi un dérivé chloré et fluoré du méthane ou de l'éthane (Fréon), un hydrocarbure, un hydrofluorocarbone (HFC), l'ammoniaque, etc.

Dans l'exemple décrit, le fluide frigorigène est du R134a (HFC).

La source chaude 18 comprend par exemple un échangeur thermique 24 fluide frigorigène/air, dit condenseur.

Le compresseur 20 et le condenseur 24 sont agencés dans un compartiment C1 du véhicule formant, de préférence, un compartiment moteur de ce véhicule. Le condenseur 24 est agencé, par exemple, dans une face avant du véhicule.

La source froide 16 comporte un échangeur thermique 26 fluide frigorigène/air, dit premier évaporateur, ainsi qu'un échangeur thermique 28, fluide frigorigène/liquide caloporteur, dit second évaporateur.

Ces premier 26 et second 28 évaporateurs sont raccordés respectivement à des première 30 et seconde 32 branches parallèles d'évaporateur du circuit principal 14 de fluide frigorigène. Les premiers 26 et second 28 évaporateurs sont donc raccordés en parallèle.

Chaque branche d'évaporateur comporte une vanne de détente 34, 36 (vanne thermostatique ou électronique, orifice calibré) agencée en aval de l'évaporateur 26, 28 comme cela est représenté sur la figure 1 ou en amont de l'évaporateur 26, 28. Chaque vanne de détente 34, 36 laisse passer le fluide frigorigène vers l'évaporateur correspondant 26, 28 en abaissant sa pression.

La première branche 30 d'évaporateur comporte une vanne de régulation de débit de fluide, notamment de type tout ou rien, agencée de préférence en aval du premier évaporateur 26. Dans l'exemple illustré, cette vanne de régulation et la vanne de détente de la première branche 30 forment un seul et même organe 34.

Le second évaporateur 28 couple thermiquement le circuit principal 14 de fluide frigorigène à un circuit secondaire 38 de liquide caloporteur. Ce circuit 38 comporte une pompe 40, de préférence électrique, de mise en circulation du liquide caloporteur, raccordée, dans l'exemple illustré, à une sortie du second évaporateur 28. En variante, la pompe 40 pourrait être agencée en amont du second évaporateur 28.

Le liquide caloporteur du circuit secondaire 38 est, par exemple, un mélange d'eau et d'antigel.

Le sens de circulation du liquide caloporteur dans le circuit secondaire 38 est indiqué par des flèches sur la figure 1.

Le circuit secondaire 38 peut être raccordé, d'une part, à un premier échangeur thermique secondaire 42 en échange thermique avec un premier organe exothermique du véhicule et, d'autre part, à un second échangeur thermique secondaire 44 en échange thermique avec un second organe exothermique du véhicule.

Les premier 42 et second 44 échangeurs thermiques secondaires sont raccordés en parallèle dans le circuit secondaire 38 de liquide caloporteur. On notera que la branche de ce circuit secondaire 38 à laquelle est raccordée le second échangeur thermique secondaire 44 comporte une vanne 46 de régulation de débit de liquide caloporteur, notamment de type tout ou rien, agencée de préférence en aval de cet échangeur secondaire 44.

Dans l'exemple décrit, le premier organe exothermique, en échange thermique avec l'échangeur 42, est formé par un dispositif d'électronique de puissance destiné à commander un moteur électrique d'entraînement du véhicule. Par ailleurs, le second organe exothermique, en échange thermique avec l'échangeur 44, est formé par une batterie d'alimentation du moteur électrique du véhicule.

En variante, le circuit secondaire 38 de liquide caloporteur pourrait n'être raccordé qu'à un seul échangeur thermique secondaire, par exemple l'échangeur 44 en échange thermique avec la batterie.

On notera que, selon l'invention, les organes exothermiques en échange thermique avec les échangeurs 42, 44 peuvent être quelconques.

Le premier évaporateur 26 est agencé par exemple dans un compartiment C2 du véhicule formant un habitacle du véhicule, plus particulièrement un bloc de climatisation de l'habitacle. Le second évaporateur 28 et les deux échangeurs thermiques secondaires 42, 44 sont agencés par exemple dans un compartiment C3 du véhicule distinct de l'habitacle. Ce compartiment C3 peut être formé, par exemple, par le compartiment moteur (dans ce cas les compartiments C1 et C3 sont identiques) ou bien par un compartiment disposé sous un plancher de l'habitacle du véhicule.

On décrira ci-dessous les principaux aspects du fonctionnement du dispositif de régulation thermique 10 selon l'invention.

### a) fonctionnement du dispositif de régulation thermique 10 en saison froide

Lors du démarrage du véhicule, les organes exothermiques en échange thermique avec les échangeurs 42, 44 n'ont pas besoin d'être refroidis car leur température est suffisamment basse. De même, l'habitacle du véhicule n'a pas besoin d'être refroidi.

De ce fait, la pompe à chaleur 12 et la pompe 40 du circuit secondaire 38 de liquide caloporteur sont désactivées.

Après une certaine durée de fonctionnement de la motorisation électrique du véhicule, la température des organes exothermiques en échange thermique avec les échangeurs 42, 44 s'élève. La pompe à chaleur 12 et la pompe 40 du circuit secondaire 38 sont alors activées. La vanne 46 permet de régler selon les besoins le refroidissement de l'organe exothermique associé au second échangeur thermique secondaire 44. Le compresseur 20 fonctionne à un faible régime suffisant pour évacuer les calories provenant des organes exothermiques et du circuit secondaire 38 vers la source chaude 18 de la pompe à chaleur.

La vanne 34 permet de régler selon les besoins le refroidissement de l'habitacle.

Le cas échéant, le compresseur 20 fonctionne à un régime plus élevé de façon à permettre le refroidissement de l'habitacle par l'intermédiaire du premier évaporateur 26 agencé dans cet habitacle.

### b) fonctionnement du dispositif de régulation thermique 10 en saison chaude

Dans ce cas, le compresseur 20 fonctionne généralement à un régime élevé de façon à refroidir, d'une part, l'habitacle, par l'intermédiaire du premier évaporateur 26, et d'autre part, les organes exothermiques, par l'intermédiaire du second évaporateur 28.

Si au cours du fonctionnement du véhicule, il n'est plus nécessaire de refroidir les organes exothermiques, la pompe 40 est désactivée.

On a représenté sur la figure 2 un dispositif de régulation thermique selon un second mode de réalisation de l'invention. Sur cette figure 2, les éléments analogues à ceux de la figure 1 sont désignés par des références identiques.

Dans ce second mode de réalisation de l'invention, illustré sur la figure 2, le fluide frigorigène du circuit principal 14 comprend du dioxyde de carbone.

Le circuit principal 14 comprend un échangeur thermique intermédiaire classique 48 traversé par une branche du circuit principal 14 en amont du compresseur 20 et une branche du circuit principal 14 en aval du condenseur 24.

Parmi les avantages de l'invention, on notera que le circuit secondaire 38 de liquide caloporteur, couplé à la pompe à chaleur 12 par le second évaporateur 28, permet de refroidir efficacement la batterie et le dispositif d'électronique de puissance d'un véhicule électrique ou hybride. De ce fait, la température maximale de la batterie peut être limitée de façon à accroître la durée de vie de cette batterie. Par ailleurs, la température du liquide caloporteur en échange thermique avec le dispositif d'électronique de puissance peut être abaissée efficacement par rapport à un dispositif de régulation thermique classique, de façon à permettre de réduire notablement le volume de ce dispositif d'électronique de puissance.

En saison chaude, le circuit secondaire 38 de liquide caloporteur, couplé thermiquement à la source froide 16 de la pompe à chaleur, permet de réduire rapidement la température de la batterie de façon à la stabiliser à la valeur d'environ 35° garantissant une durée de vie relativement longue des batteries.

Le temps de réaction des batteries lors d'un démarrage à chaud peut être réduit.

L'invention permet donc de faciliter l'utilisation de véhicules électriques ou hybrides dans des régions chaudes.

Enfin, l'invention peut être adaptée aux véhicules existants sans modifier notablement la configuration du compartiment moteur et des moyens de climatisation de l'habitacle de ces véhicules.

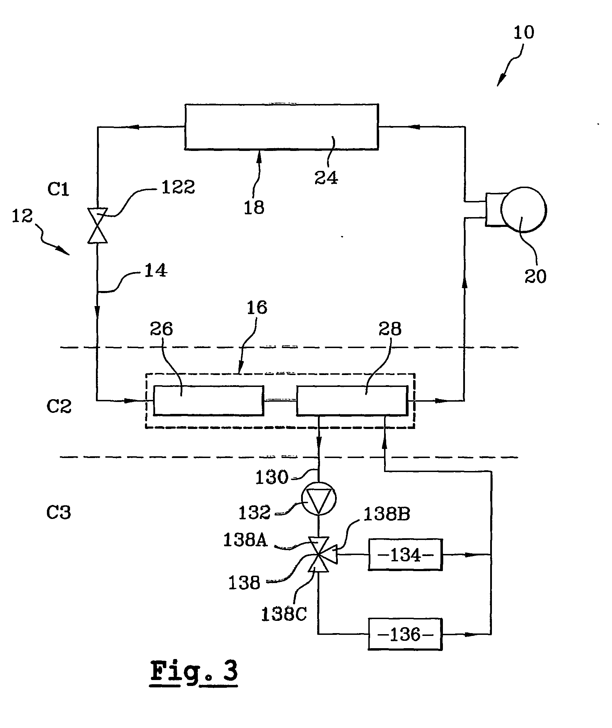

On a représenté sur les figures 3 à 5 un dispositif de régulation thermique selon des troisième à cinquième modes de réalisation, respectivement. Sur ces figures, les éléments analogues à ceux des figures précédentes sont désignés par des références identiques.

Sur la figure 3, les sources froide 16 et chaude 18 sont raccordées entre elles par le compresseur 20 et une vanne de détente 122. Le fluide frigorigène circulant dans le circuit principal 14 est d'un type classique. Ce fluide frigorigène est choisi par exemple parmi un dérivé chloré et fluoré du méthane ou de l'éthane (Fréon), un hydrocarbure, l'ammoniaque, le dioxyde de carbone, etc.

Le compresseur 20, la vanne de détente 122 et le condenseur 24 sont agencés dans un compartiment C1 du véhicule.

Le second évaporateur 28 couple thermiquement le circuit principal 14 de fluide frigorigène à un circuit secondaire 130 de liquide caloporteur. Ce circuit 130 comporte une pompe 132, de préférence électrique, de mise en circulation du liquide caloporteur, raccordée, dans l'exemple illustré, à une sortie du second évaporateur 28. En variante, la pompe 132 pourrait être agencée en amont du second évaporateur 28.

Le liquide caloporteur du circuit secondaire 130 est, par exemple, un mélange d'eau et d'antigel.

Le circuit secondaire 130 peut être raccordé, d'une part, à un premier échangeur thermique secondaire 134 en échange thermique avec un premier organe exothermique du véhicule et, d'autre part, à un second échangeur thermique secondaire 136 en échange thermique avec un second organe exothermique du véhicule.

Les premier 134 et second 136 échangeurs thermiques secondaires sont raccordés en parallèle dans le circuit secondaire 130 de liquide caloporteur.

Dans l'exemple décrit, le premier organe exothermique, en échange thermique avec l'échangeur 134, est formé par un dispositif d'électronique de puissance destiné à commander un moteur électrique d'entraînement du véhicule. Par ailleurs, le second organe exothermique, en échange thermique avec l'échangeur 136, est formé par une batterie d'alimentation du moteur électrique du véhicule.

En variante, le circuit secondaire 130 de liquide caloporteur pourrait n'être raccordé qu'à un seul échangeur thermique secondaire, par exemple l'échangeur 136 en échange thermique avec la batterie.

On notera que, selon l'invention, les organes exothermiques en échange thermique avec les échangeurs 134, 136 peuvent être quelconques.

Le circuit secondaire 130 de liquide caloporteur comprend une vanne 138 munie d'une première voie 138A raccordée à la sortie du second évaporateur 28, par l'intermédiaire de la pompe 132, d'une deuxième voie 138B raccordée à une entrée du premier échangeur secondaire 134 et d'une troisième voie 138C raccordée à une entrée du second échangeur secondaire 136.

Les premier 26 et second 28 évaporateurs sont raccordés en série. Ces évaporateurs 26, 28 peuvent être intégrés dans un module commun ou bien séparés l'un de l'autre.

Dans le troisième mode de réalisation illustré sur la figure 3, le second évaporateur 28 est agencé en aval du premier évaporateur 26 en considérant le sens de circulation du fluide frigorigène dans le circuit principal 14.

Par ailleurs, on notera que dans ce troisième mode de réalisation, le premier évaporateur 26 et le second évaporateur 28 sont agencés dans le compartiment C2. Par contre, les deux échangeurs thermiques secondaires 134, 136 sont agencés dans le compartiment C3 du véhicule distinct de l'habitacle.

On décrira ci-dessous les principaux aspects du fonctionnement du dispositif de régulation thermique 10 selon le troisième mode de réalisation.

### c) fonctionnement du dispositif de régulation thermique 10 en saison froide

Lors du démarrage du véhicule, les organes exothermiques en échange thermique avec les échangeurs 134, 136 n'ont pas besoin d'être refroidis car leur température est suffisamment basse. De même, l'habitacle du véhicule n'a pas besoin d'être refroidi.

De ce fait, la pompe à chaleur 12 et la pompe 132 du circuit secondaire 130 de liquide caloporteur sont désactivées.

Après une certaine durée de fonctionnement de la motorisation électrique du véhicule, la température des organes exothermiques en échange thermique avec les échangeurs 134, 136 s'élève. La pompe à chaleur 12 et la pompe 132 du circuit secondaire 130 sont alors activées. La vanne 138 est réglée de façon à permettre le refroidissement de chaque organe exothermique selon les besoins. Le compresseur 20 fonctionne à un faible régime suffisant pour évacuer les calories provenant des organes exothermiques et du circuit secondaire 130 vers la source chaude 18 de la pompe à chaleur.

Le cas échéant, le compresseur 20 fonctionne à un régime plus élevé de façon à permettre le refroidissement de l'habitacle par l'intermédiaire du premier évaporateur 26 agencé dans cet habitacle.

### d) fonctionnement du dispositif de régulation thermique 10 en saison chaude

Dans ce cas, le compresseur 20 fonctionne généralement à un régime élevé de façon à refroidir, d'une part, l'habitacle, par l'intermédiaire du premier évaporateur 26, et d'autre part, les organes exothermiques, par l'intermédiaire du second évaporateur 28.

Si au cours du fonctionnement du véhicule, il n'est plus nécessaire de refroidir les organes exothermiques, la pompe 132 est désactivée.

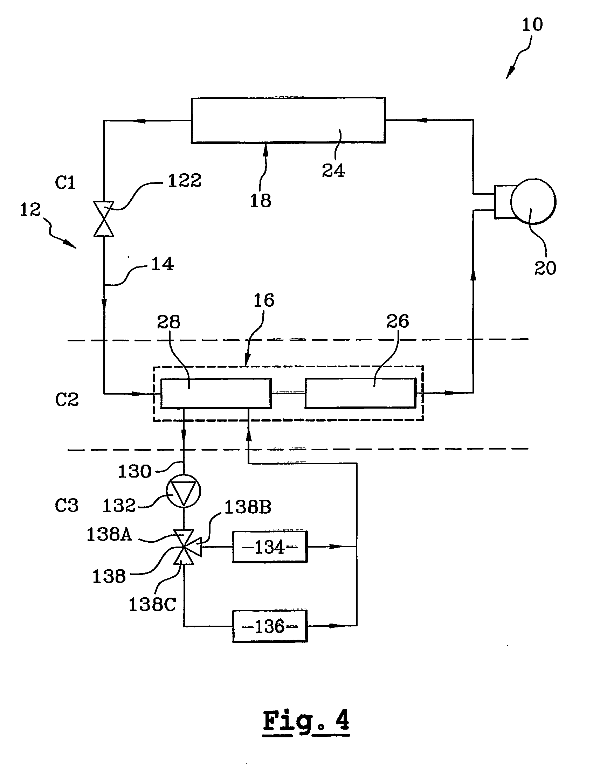

Dans le quatrième mode de réalisation, illustré sur la figure 4, le second évaporateur 28 est agencé en amont du premier évaporateur 26 de façon à optimiser le refroidissement des organes exothermiques en échange thermique avec les échangeurs 134, 136.

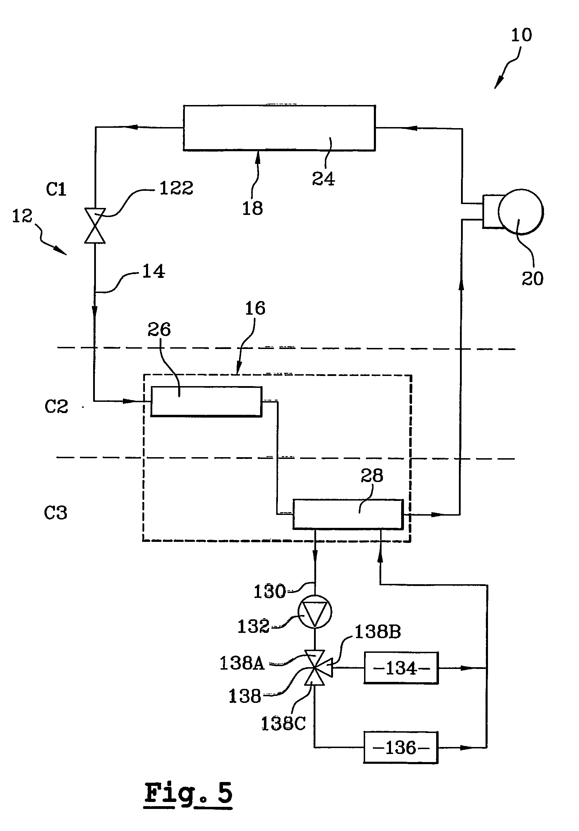

Dans le cinquième mode de réalisation, illustré sur la figure 5, le second évaporateur 28 est agencé dans le compartiment C3, distinct de l'habitacle, formant un compartiment moteur ou un compartiment disposé sous un plancher de l'habitacle du véhicule.

L'agencement dans le compartiment moteur du second évaporateur 28 facilite l'intégration du dispositif de régulation thermique 10 selon l'invention dans un véhicule classique en évitant de modifier notablement la configuration des moyens de climatisation de l'habitacle du véhicule existant déjà.

Bien entendu, une combinaison des différents modes de réalisation de l'invention décrits ci-dessus est possible sans sortir du cadre de cette invention.

Parmi les avantages de l'invention, on notera que le circuit secondaire 130 de liquide caloporteur, couplé à la pompe à chaleur 12 par le second évaporateur 28, permet de refroidir efficacement la batterie et le dispositif d'électronique de puissance d'un véhicule électrique ou hybride. De ce fait, la température maximale de la batterie peut être limitée à 45°C, ce qui permet d'accroître la durée de vie de cette batterie notamment d'un tiers de la durée de vie habituelle. Par ailleurs, la température du liquide caloporteur en échange thermique avec le dispositif d'électronique de puissance peut être abaissée d'environ 40°C par rapport à un dispositif de régulation thermique classique, ce qui permet de réduire le volume de ce dispositif d'électronique de puissance d'environ 1 litre.

En saison chaude, le circuit secondaire 130 de liquide caloporteur, couplé thermiquement à la source froide 16 de la pompe à chaleur, permet de réduire rapidement la température de la batterie de façon à la stabiliser à la valeur d'environ 45° garantissant une durée de vie relativement longue des batteries.

L'invention ne se limite pas aux modes de réalisation décrit précédemment. En particulier, chaque échangeur thermique secondaire peut être en échange thermique avec une source de calories quelconque du véhicule, par exemple une pile à combustible, ou une source de calories autre qu'un organe exothermique, par exemple de l'air de suralimentation d'un moteur thermique du véhicule.

Dans ce cas, le moteur est généralement suralimenté au moyen d'un ensemble turbo-compresseur muni, d'une part, d'une turbine entraînée par des gaz d'échappement du moteur, agencée en aval du moteur, et d'autre part, d'un compresseur d'air d'admission agencé en amont du moteur. L'air d'admission du moteur, se réchauffant dans le compresseur, peut être refroidi à la sortie de ce compresseur, grâce à un échangeur secondaire du dispositif selon l'invention afin d'optimiser les performances du moteur et minimiser les émissions de polluants.

## Revendications

1. Véhicule, tel qu'un véhicule automobile, équipé d'un dispositif de régulation thermique, du type comprenant une pompe à chaleur (12) comportant un circuit principal (14) de fluide frigorigène prélevant des calories d'une source froide (16) pour les transférer vers une source chaude (18), la source froide (16) comportant un échangeur thermique (26) fluide frigorigène/air, dit premier évaporateur, et un échangeur thermique (28) fluide frigorigène/liquide caloporteur, dit second évaporateur, directement relié au premier évaporateur (26) et couplant thermiquement le circuit principal (14) de fluide frigorigène à un circuit secondaire (38) de liquide caloporteur raccordé à au moins un premier échangeur thermique secondaire (42,44) en échange thermique avec au moins une première source de calories du véhicule, la source chaude (18) comportant un échangeur thermique (24) fluide frigorigène/air, dit condenseur, **caractérisé en ce que** le condenseur (24) est agencé dans le compartiment moteur (C1) du véhicule, et le premier évaporateur (26) de la source froide (18) est agencé dans l'habitacle (C2) du véhicule de façon à permettre au premier évaporateur (26) de refroidir cet habitacle, **en ce que** le second évaporateur (28) de la source froide (18) est agencé dans une partie (C3) du véhicule distincte de l'habitacle, **en ce que** chaque échangeur thermique secondaire (42,44) est agencé dans la partie (C3) du véhicule distincte de l'habitacle, et **en ce que** chaque source de calories est soit un organe exothermique du véhicule, dont on veut optimiser le fonctionnement par refroidissement, choisi parmi un organe formant dispositif d'électronique de puissance, une batterie d'alimentation d'un moteur électrique d'entraînement du véhicule ou une pile à combustible, soit de l'air de suralimentation d'un moteur thermique du véhicule dont on veut optimiser le fonctionnement par refroidissement de l'air de suralimentation.

2. véhicule selon la revendication 1, **caractérisé en ce que** la partie (C3) du véhicule dans laquelle sont agencés le second évaporateur (28) et chaque échangeur thermique secondaire (42,44) est formée par le compartiment moteur ou par un compartiment sous le plancher de l'habitacle du véhicule.

3. Véhicule selon la revendication 1 ou 2, **caractérisé en ce que** le circuit secondaire (38) de liquide caloporteur est raccordé à un second échangeur thermique secondaire (42,44) en échange thermique avec une seconde source de calories du véhicule.

4. Véhicule selon la revendication 3, **caractérisé en ce que** les premier et second échangeurs secondaires (42,44) sont raccordés en parallèle dans le circuit secondaire (38) de liquide caloporteur.

5. Véhicule selon l'une quelconque des revendications précédentes, **caractérisé en ce que** les premier (26) et second (28) évaporateurs sont raccordés en parallèle.

6. Véhicule selon la revendication 5, **caractérisé en ce que** le circuit principal (14) de fluide frigorigène comprend des première (30) et seconde (32) branches parallèles d'évaporateur auxquelles sont raccordées respectivement les premier (26) et second (28) évaporateurs, chaque branche (30,32) d'évaporateur comportant une vanne de détente (34,36) agencée en aval ou en amont de l'évaporateur (26,28).

7. véhicule selon la revendication 6, **caractérisé en ce que** la première branche (30) d'évaporateur comporte une vanne (34) de régulation de débit de fluide agencée de préférence en aval du premier évaporateur (26).

8. Véhicule selon la revendication 7, **caractérisé en ce que**, dans la première branche (30) d'évaporateur, la vanne de détente et la vanne de régulation forment un seul et même organe (34).

9. Véhicule selon l'une quelconque des revendications précédentes, **caractérisé en ce que** les premier (26) et second évaporateur (28) sont raccordés en série, le second évaporateur (28) étant agencé en amont ou en aval du premier évaporateur (26) en considérant le sens de circulation du fluide frigorigène dans le circuit principal (14).

10. Véhicule selon l'une quelconque des revendications précédentes, **caractérisé en ce que** le circuit secondaire (38) de liquide caloporteur est muni d'une pompe (40) d'entraînement de ce liquide caloporteur.

11. véhicule selon l'une quelconque des revendications précédentes, **caractérisé en ce que** le fluide frigorigène du circuit principal (14) est du type R134a.

12. Véhicule selon l'une quelconque des revendications précédentes, **caractérisé en ce que** le fluide frigorigène du circuit principal (14) comprend du dioxyde de carbone.

13. Véhicule selon la revendication 12, **caractérisé en ce que** le circuit principal (14) comprend un échangeur thermique intermédiaire (48) traversé par une branche du circuit principal (14) en amont du compresseur (20) et une branche du circuit principal (14) en aval du condenseur (24).

14. Véhicule selon l'une quelconque des revendications précédentes, **caractérisé en ce que** le liquide caloporteur du circuit secondaire (38) de liquide caloporteur est un mélange d'eau et d'antigel.

## Claims

1. A vehicle, such as a motor vehicle, equipped with a temperature control device, of the type comprising a heat pump (12) including a main circuit (14) of refrigerant fluid taking calories from a cold source (16) in order to transfer them towards a hot source (18), the cold source (16) including a refrigerant fluid/air heat exchanger (26), a so-called first evaporator, and a refrigerant fluid/coolant liquid heat exchanger (28), a so-called second evaporator, directly connected to the first evaporator (26) and thermally coupling the main refrigerant fluid circuit (14) with a secondary circuit (38) of coolant liquid connected to at least one first secondary heat exchanger (42, 44) exchanging heat with at least one first source of calories of the vehicle, the hot source (18) including a refrigerant fluid/air heat exchanger (24), a so-called condenser, **characterized in that** the condenser (24) is laid out in the engine compartment (C1) of the vehicle, and the first evaporator (26) of the cold source (18) is laid out in the passenger compartment (C2) of the vehicle in order to allow the first evaporator (26) to cool this passenger compartment, and **in that** the second evaporator (28) of the cold source (18) is laid out in a portion (C3) of the vehicle distinct from the passenger compartment, **in that** each secondary heat exchanger (42, 44) is laid out in the portion (C3) of the vehicle distinct from the passenger compartment, and **in that** each source of calories is either an exothermic unit of the vehicle, the operation of which is intended to be optimized by cooling, selected from a unit forming a power electronic device, a battery powering an electric drive motor of the vehicle or a fuel cell, or charge air of a heat engine of the vehicle, the operation of which is intended to be optimized by cooling the charge air.

2. The vehicle according to claim 1, **characterized in that** the portion (C3) of the vehicle in which the second evaporator (28) and each secondary heat exchanger (42, 44) are laid out, is formed by the engine compartment or by a compartment under the floor of the passenger compartment of the vehicle.

3. The vehicle according to claim 1 or 2, **characterized in that** the secondary circuit (38) of coolant liquid is connected to a second secondary heat exchanger (42, 44) exchanging heat with a second source of calories of the vehicle.

4. The vehicle according to claim 3, **characterized in that** the first and second secondary exchangers (42, 44) are connected in parallel in the secondary coolant liquid circuit (38).

5. The vehicle according of the preceding claims, **characterized in that** the first (26) and second (28) evaporators are connected in parallel.

6. The vehicle according to claim 5, **characterized in that** the main circuit (14) of refrigerant fluid comprises first (30) and second (32) parallel evaporator branches to which the first (26) and second (28) evaporators are connected, respectively, each evaporator branch (30, 32) including an expansion valve (34, 36) laid out downstream or upstream from the evaporator (26, 28).

7. The vehicle according to claim 6, **characterized in that** the first evaporator branch (30) includes a fluid rate control valve (34) preferably laid out downstream from the first evaporator (26).

8. The vehicle according to claim 7, **characterized in that**, in the first evaporator branch (30), the expansion valve and the control valve form a single and same unit (34).

9. The vehicle according to any of the preceding claims, **characterized in that** the first (26) and second evaporator (28) are connected in series, the second evaporator (28) being laid out upstream or downstream from the first evaporator (26) when considering the flow direction of the refrigerant fluid in the main circuit (14).

10. The vehicle according to any of the preceding claims, **characterized in that** the secondary circuit (38) of coolant fluid is provided with a drive pump (40) for this coolant liquid.

11. The vehicle according to any of the preceding claims, **characterized in that** the refrigerant fluid of the main circuit (14) is of the R134a type.

12. The vehicle according to any of the preceding claims, **characterized in that** the refrigerant fluid of the main circuit (14) comprises carbon dioxide.

13. The vehicle according to claim 12, **characterized in that** the main circuit (14) comprises an intermediate heat exchanger (48) crossed by a branch of the main circuit (14) upstream from the compressor (20) and a branch of the main circuit (14) downstream from the condenser (24).

14. The vehicle according to any of the preceding claims, **characterized in that** the coolant liquid of the secondary circuit (38) of coolant liquid is a mixture of water and antifreeze.

## Patentansprüche

1. Fahrzeug, wie ein Kraftfahrzeug, ausgerüstet mit einer Vorrichtung zur thermischen Regelung, eines Typs, eine Wärmepumpe (12) umfassend, die einen Haupt-Kältemittelkreislauf (14) umfasst, der einer Kältequelle (16) Kalorien entnimmt, um sie einer Wärmequelle (18) zuzuführen, wobei die Kältequelle (16) einen Wärmetauscher (26) Kältemittel/Luft aufweist, erster Verdampfer genannt, und einen Wärmetauscher (28) Kältemittel/Wärmeträgerflüssigkeit, zweiter Verdampfer genannt, der direkt mit dem ersten Verdampfer (26) verbunden ist und den Haupt-Kältemittelkreislauf (14) mit einem sekundären Wärmeträgerflüssigkeitskreislauf (38) thermisch verbindet, der mindestens an einen ersten sekundären Wärmetauscher (42, 44) in thermischem Austausch mit mindestens einer ersten Kalorienquelle des Fahrzeugs angeschlossen ist, wobei die Wärmequelle (18) einen Wärmetauscher (24) Kältemittel/Luft, Kondensator genannt, umfasst, **dadurch gekennzeichnet, dass** der Kondensator (24) im Motorraum (C1) des Fahrzeugs angeordnet ist, und der erste Verdampfer (26) der Kältequelle (18) im Fahrgastraum (C2) des Fahrzeugs angeordnet ist, um dem ersten Verdampfer (26) zu erlauben, diesen Fahrgastraum zu kühlen, **dadurch**, dass der zweite Verdampfer (28) der Kältequelle (18) in einem vom Fahrgastraum unterschiedlichen Teil (C3) des Fahrzeugs angeordnet ist, **dadurch**, dass jeder sekundäre Wärmetauscher (42, 44) im vom Fahrgastraum unterschiedlichen Teil (C3) des Fahrzeugs angeordnet ist, und **dadurch**, dass jede Kalorienquelle entweder ein exothermisches Organ des Fahrzeugs ist, dessen Funktion durch Kühlung optimiert werden soll, ausgewählt aus einem Organ, das eine Leistungselektronik-Vorrichtung bildet, eine Batterie zur Versorgung eines elektrischen Antriebsmotors des Fahrzeugs oder eine Brennstoffzelle, oder Ladeluft eines thermischen Motors des Fahrzeugs, dessen Funktion durch Kühlung der Ladeluft optimiert werden soll.

2. Fahrzeug nach Anspruch 1, **dadurch gekennzeichnet, dass** der Teil (C3) des Fahrzeugs, in dem der zweite Verdampfer (28) und jeder sekundäre Wärmetauscher (42, 44) angeordnet sind, vom Motorraum oder von einem Raum unter dem Boden des Fahrgastraums gebildet wird.

3. Fahrzeug nach Anspruch 1 oder 2, **dadurch gekennzeichnet, dass** der sekundäre Wärmeträgerflüssigkeitskreislauf (38) an einen zweiten sekundären Wärmetauscher (42, 44) in thermischem Austausch mit einer zweiten Kalorienquelle des Fahrzeugs angeschlossen ist.

4. Fahrzeug nach Anspruch 3, **dadurch gekennzeichnet, dass** der erste und der zweite sekundäre Wärmetauscher (42, 44) parallel im sekundären Wärmeträgerflüssigkeitskreislauf (38) angeschlossen sind.

5. Fahrzeug nach einem der vorangehenden Ansprüche, **dadurch gekennzeichnet, dass** der erste (26) und zweite (28) Verdampfer parallel angeschlossen sind.

6. Fahrzeug nach Anspruch 5, **dadurch gekennzeichnet, dass** der Haupt-Kältemittelkreislauf (14) erste (30) und zweite (32) parallele Verdampferabzweigungen umfasst, an die jeweils der erste (26) und der zweite (28) Verdampfer angeschlossen sind, wobei jede Verdampferabzweigung (30, 32) ein Druckminderventil (34, 36) umfasst, das stromabwärts oder stromaufwärts zum Verdampfer (26, 28) angeordnet ist.

7. Fahrzeug nach Anspruch 6, **dadurch gekennzeichnet, dass** die erste Verdampferabzweigung (30) ein Ventil (34) zur Regelung des Flüssigkeitsdurchsatzes aufweist, das vorzugsweise stromabwärts zum ersten Verdampfer (26) angeordnet ist.

8. Fahrzeug nach Anspruch 7, **dadurch gekennzeichnet, dass** in der ersten Verdampferabzweigung (30) das Druckminderventil und das Regelungsventil ein und dasselbe Organ (34) bilden.

9. Fahrzeug nach einem der vorangehenden Ansprüche, **dadurch gekennzeichnet, dass** der erste (26) und der zweite Verdampfer (28) in Reihe angeschlossen sind, wobei der zweite Verdampfer (28) unter Berücksichtigung der Fließrichtung des Kältemittels im Hauptkreislauf (14) stromaufwärts oder stromabwärts zum ersten Verdampfer (26) angeordnet ist.

10. Fahrzeug nach einem der vorangehenden Ansprüche, **dadurch gekennzeichnet, dass** der sekundäre Wärmeträgerflüssigkeitskreislauf (38) mit einer Pumpe (40) zum Antreiben dieser Wärmeträgerflüssigkeit ausgestattet ist.

11. Fahrzeug nach einem der vorangehenden Ansprüche, **dadurch gekennzeichnet, dass** das Kältemittel des Hauptkreislaufs (14) vom Typ R134a ist.

12. Fahrzeug nach einem der vorangehenden Ansprüche, **dadurch gekennzeichnet, dass** das Kältemittel des Hauptkreislaufs (14) Kohlendioxid umfasst.

13. Fahrzeug nach Anspruch 12, **dadurch gekennzeichnet, dass** der Hauptkreislauf (14) einen Zwischenwärmetauscher (48) umfasst, der von einer Abzweigung des Hauptkreislaufs (14) stromaufwärts vom Kompressor (20) und einer Abzweigung des Hauptkreislaufs (14) stromabwärts vom Kondensator (24) durchquert wird.

14. Fahrzeug nach einem der vorangehenden Ansprüche, **dadurch gekennzeichnet, dass** die Wärmeträgerflüssigkeit des sekundären Wärmeträgerflüssigkeitskreislaufs (38) ein Gemisch aus Wasser und Frostschutz ist.
